# DEMANDE DE BREVET EUROPEEN

(11) **EP 4 763 713 A1**
(43) Date de publication de la demande: **24.06.2026**
(21) Numéro de dépôt: 25225024.6
(22) Date de dépôt: 18.12.2025
(51) Int. Cl.: B64G 1/00, B64G 1/26, B64G 1/40

(54) **LANCEUR SPATIAL ÉQUIPÉ D'UN SYSTÈME DE PROPULSION AUXILIAIRE, ET SYSTÈME DE PROPULSION AUXILIAIRE ÉQUIPANT UN TEL LANCEUR**

(30) Priorité: 18.12.2024 FR 2414415; 25.09.2025 FR 2511019
(71) Demandeur: Latitude, 51100 Reims (FR)
(72) Inventeur: HEURLIN, Romann, 51100 REIMS (FR)
(74) Mandataire: IP Trust

(57) **Abrégé**

Lanceur spatial (1)comprenant un premier étage équipé d'un premier système de propulsion dédié à la phase de vol intra-atmosphérique du lanceur et un deuxième étage (E2) prévu pour recevoir une charge utile, comportant un moteur principal (10) et un système de propulsion auxiliaire (APS) intégrant deux unités de propulsion auxiliaires (APU) (13,16) et un ensemble de propulseurs de commande de réaction (RCS) chargés du contrôle d'attitude dudit deuxième étage lors de la phase de vol extra-atmosphérique du lanceur.

## Description

### DOMAINE DE L'INVENTION

La présente invention concerne un lanceur spatial équipé d'un système de propulsion auxiliaire. Elle vise également un système de propulsion auxiliaire équipant un lanceur spatial.

### ETAT DE LA TECHNIQUE

Un étage de fusée possède généralement un unique système de propulsion pour effectuer sa mission. Un fois les ergols brûlés, l'étage est séparé pour laisser un autre étage supérieur, plus léger, continuer la mission, entraînant des coûts supplémentaires.

Le présent déposant a développé un second étage qui inclut deux systèmes de propulsion différents afin d'éviter d'avoir un étage de plus qui sera séparé lors du vol. La majorité de la phase propulsive est délivrée par un moteur principal afin de placer le second étage sur une orbite elliptique. Ensuite, au lieu de séparer un troisième étage pour finir la mission, on utilise un système de propulsion auxiliaire pour effectuer les dernières manœuvres orbitales pour les clients. A la fin de sa mission, le système de propulsion auxiliaire peut être utilisé pour désorbiter l'étage.

Le besoin d'un système de propulsion auxiliaire sur le deuxième étage du lanceur spatial est né de trois besoins :
- un besoin d'accélération pendant la phase de séparation des étages pour pousser les ergols du deuxième étage au fond des réservoirs afin de réaliser l'allumage du moteur principal. De plus, fournir une poussée pendant la phase de séparation des étages aide aux manœuvres d'éloignement des étages en réduisant leur durée et donc en optimisant les performances du lanceur global.
- un besoin d'un système de propulsion rallumable, de faible puissance et de haute précision pour fournir de petites impulsions pour les manœuvres orbitales auxquelles le moteur principal du deuxième étage n'est pas adapté. Les exigences de manœuvres en orbite et de précision sont remplies par le système de production auxiliaire.
- Un besoin d'un système de contrôle de l'attitude du lanceur lors des phases de vol du second étage et des phases orbitales. Les exigences de contrôle d'attitude sont remplies par le système de propulsion auxiliaire grâce à l'utilisation de ses propulseurs RCS rallumables, de faible puissance et de haute précision.

Le but de la présente invention est de proposer un nouveau système de propulsion d'un lanceur spatial, qui réponde à ces trois besoins, tout en contribuant à minimiser la masse et le coût de ce lanceur en apportant une solution technique unique et commune plutôt que des systèmes indépendants pour répondre à chacun des trois besoins.

### EXPOSE DE L'INVENTION

Cet objectif est atteint avec un lanceur spatial comprenant un premier étage équipé d'un premier système de propulsion dédié à la phase de vol intra-atmosphérique dudit lanceur et un deuxième étage prévu pour recevoir une charge utile, comportant un moteur principal et un système de propulsion auxiliaire (APS) intégrant deux unités de propulsion auxiliaires (APU) et un ensemble de propulseurs de commande de réaction (RCS) chargés du contrôle d'attitude dudit deuxième étage lors de la phase de vol extra-atmosphérique dudit lanceur.

Le système de propulsion auxiliaire (APS) et l'ensemble de propulseurs de commande de réaction (RCS) peuvent avantageusement partager des réservoirs et des lignes d'alimentation communs.

Dans un mode de réalisation préféré de l'invention, le système de propulsion auxiliaire (APS) est fixé sur une jupe inférieure du deuxième étage autour du moteur principal.

Les deux unités de propulsion auxiliaire sont de préférence situées symétriquement par rapport à un axe longitudinal du lanceur, de chaque côté du moteur principal.

L'ensemble de propulseurs de commande de réaction (RCS) peut avantageusement comprendre deux sous-ensembles de trois propulseurs de chaque côté dudit lanceur, chaque sous-ensemble de propulseurs étant situé à proximité d'une des unités de propulsion auxiliaire (APU) qui sont de préférence orientées vers le centre de gravité du deuxième étage.

Le système de propulsion auxiliaire peut en outre comprendre, pour chaque unité de propulsion auxiliaire, un réservoir de propergol agencé pour alimenter aussi les propulseurs de commande de réaction associés à cette unité de propulsion auxiliaire.

Des réservoirs d'ergols, prévus pour alimenter les unités de propulsion auxiliaire sont disposés face à face dans une section entre les premier et deuxième étages pour équilibrer la position du centre de masse du système de propulsion auxiliaire sur les axes de tangage et de lacet dudit lanceur.

Dans chaque sous-ensemble de propulseurs de commande de réaction, les propulseurs de commande de réaction sont reliés aux réservoirs d'ergol par une seule ligne d'ergols partagée.

Dans un mode préféré de réalisation, un sous-ensemble de propulsion de commande de réaction (RCS) et son unité de propulsion auxiliaire (APU) associée sont conçus comme un ensemble autonome avant d'être intégré dans le lanceur.

Des sorties de tuyère des propulseurs de commande de réaction (RCS) et de l'unité de propulsion auxiliaire (APU) peuvent être avantageusement situées à l'extérieur du cadre du deuxième étage.

Pour un lanceur spatial dans lequel le système de propulsion auxiliaire comporte des actionneurs de système de propulsion auxiliaire et des capteurs de système de propulsion auxiliaire, ce lanceur comprend en outre, pendant son vol, un système d'alimentation en énergie (PDS) pour alimenter ces actionneurs et un système d'acquisition de données (DAS) auquel ces capteurs sont connectés.

Suivant un autre aspect de l'invention, il est proposé un système de propulsion auxiliaire (APS) équipant un lanceur spatial selon l'invention, ce lanceur spatial comportant comprenant un premier étage équipé d'un premier système de propulsion dédié à la phase de vol intra-atmosphérique dudit lanceur et un deuxième étage prévu pour recevoir une charge utile et comportant un moteur principal, caractérisé en ce qu'il comprend deux unités de propulsion auxiliaires (APU) et un ensemble de propulseurs de commande de réaction (RCS) chargés du contrôle d'attitude dudit deuxième étage lors de la phase de vol extra-atmosphérique dudit lanceur.

Le système de propulsion auxiliaire selon l'invention peut être organisé en deux sous-ensembles de propulsion auxiliaire comprenant chacun une unité de propulsion auxiliaire (APU) et un sous-ensemble de propulseurs de commande de réaction (RCS), ces deux sous-ensembles de propulsion auxiliaire étant disposés de part et d'autre du moteur principal.

Les systèmes de propulsion auxiliaire mis en œuvre dans le lanceur spatial selon l'invention utilisent des ergols verts.

Les fonctions d'un système de propulsion auxiliaire APS selon l'invention équipant un lanceur spatial doté de deux étages sont les suivantes :
- fournir une accélération longitudinale spécifique et quasi constante au deuxième étage du lanceur,
- fournir un différentiel de vitesse (Delta V) au deuxième étage du lanceur avec une grande précision et répétabilité,
- fournir un contrôle d'attitude au deuxième étage du lanceur sur les trois axes de lacet, de tangage et de roulis,
- démarrer ses propulseurs en microgravité,
- redémarrer tous ses propulseurs plusieurs fois,
- maintenir les performances nominales tout en tirant plusieurs propulseurs à la fois (APU et RCS),
- s'interfacer avec un système au sol pour les processus de remplissage, pressurisation, vidange, ventilation ou nettoyage,
- être assemblé sur le deuxième étage du lanceur,
- être alimenté et contrôlé par le PDS et le DAS du lanceur.

### DESCRIPTION DES FIGURES

[Fig. 1] La Figure 1 représente un exemple d'intégration d'un système de propulsion auxiliaire selon l'invention dans un lanceur spatial ;
[Fig. 2] La Figure 2 illustre un exemple de positionnement de propulseurs RCS sur un second étage d'un lanceur spatial ;
[Fig. 3] La Figure 3 illustre différents états opérationnels d'un réservoir de propergol mis en œuvre dans un système de propulsion auxiliaire selon l'invention ;
[Fig. 4] La Figure 4 est une vue schématique de dessous d'un exemple de réalisation d'un système de propulsion auxiliaire selon l'invention ;
[Fig. 5] La Figure 5 est une vue schématique en perspective d'un système de canalisation mis en œuvre dans un système de propulsion auxiliaire selon l'invention ;
[Fig. 6] La Figure 6 représente des supports mécaniques équipant un pack de trois propulseurs RCS dans un système de propulsion auxiliaire selon l'invention ;
[Fig. 7] La Figure 7 illustre schématiquement les positions respectives de packs de propulseurs RCS de chaque côté d'un propulseur principal d'un lanceur spatial selon l'invention ;
[Fig. 8] La Figure 8 représente un exemple d'intégration fluidique et électrique dans un système de propulsion auxiliaire selon l'invention ; et
[Fig. 9] La Figure 9 est un schéma synoptique global d'un exemple de réalisation d'un système de propulsion auxiliaire selon l'invention.

### DEFINITIONS ET ACRONYMES

| | | |
|---|---|---|
| APS | *Auxiliary Propulsion System* | Système de propulsion auxiliaire |
| APU | *Auxiliary Propulsion Unit* | Unité de propulsion auxiliaire |
| DAS | *Data Acquisition System* | Système d'acquisition de données |
| HDRM | *Hold Down Release Mechanism* | Mécanisme de maintien et de libération |
| HTP | *High-Test Peroxyde* | Péroxyde d'hydrogène |
| ISP | Impulsion spécifique | |
| MLI | Multi-Layer Insulation | Isolation multi - couches |
| MMH | Monométhylhydrazine | |
| PDS | *Power Delivery System* | Système de fourniture d'énergie |
| PLK | *Propellant Loading Kart* | Kart de chargement d'ergol |
| RCS | *Reaction Control System* | Système de commande de réaction |
| UDMH | Unsymmetrical 1,1-DiMéthylHydraz | ine |

### DESCRIPTION DETAILLEE

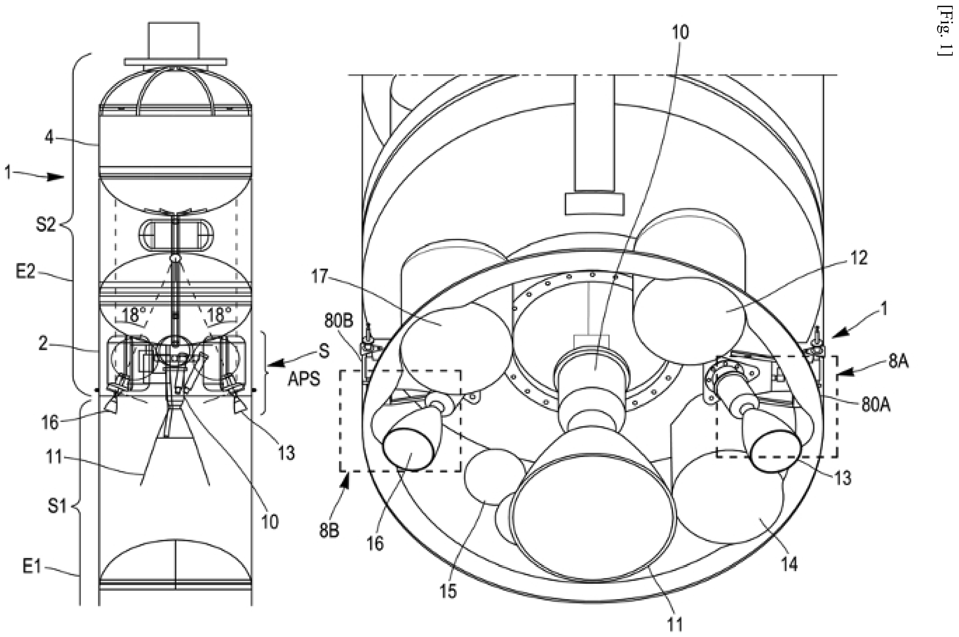

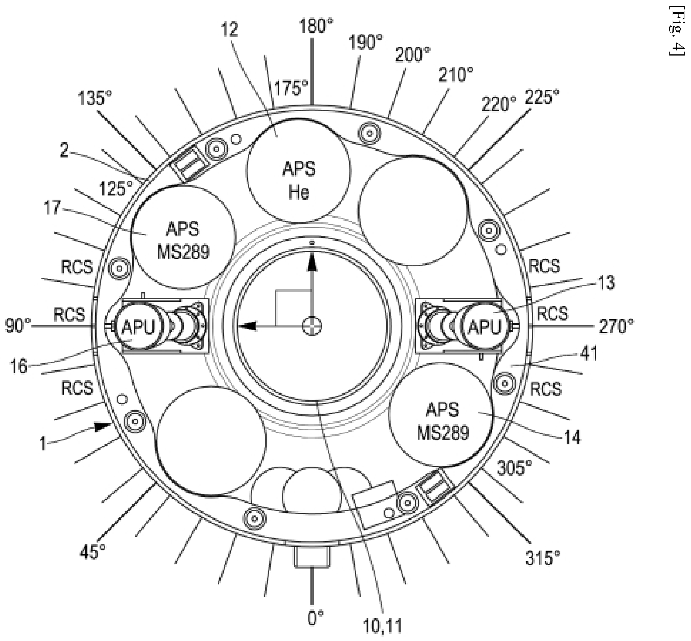

Dans un exemple pratique de réalisation, un système de propulsion auxiliaire S est disposé dans l'espace inter-étages d'un lanceur 1 comportant deux étages E1, E2. Ce système de propulsion auxiliaire S est fixé à la jupe inférieure 2 du deuxième étage E2, en référence aux figures 1 et 4. Il comporte :
- deux unités de propulsion auxiliaire APU 13,16 disposées de part et d'autre d'un moteur central 10 équipé d'une rallonge de tuyère 11,
- deux sous-ensembles 80A, 80B de propulseurs de commande de réaction RCS, disposés chacun à proximité d'une des deux unités de propulsion auxiliaire 13,16,
- deux réservoirs 14,17 de propergols connectés entre eux et aux deux unités de propulsion auxiliaire 13,16 et aux propulseurs de commande associés,
- un réservoir d'hélium 12 connecté aux deux réservoirs de propergol 14,17 pour en assurer la pressurisation,
- un ensemble de tuyauterie de gaz et de liquides ainsi que d'équipements fluides aux fonctions variées servant au bon fonctionnement du système de propulsion telles qu'acheminer les fluides, détendre et réguler la pression du gaz, assurer la sécurité du système et des opérateurs, permettre la vidange des fluides stockés...etc.

Les deux unités de propulsion auxiliaire APU 13,16 sont orientées d'un angle par rapport à l'axe longitudinal du lanceur 1 tel que les axes longitudinaux respectifs de ces deux unités de propulsion auxiliaire 13,16 se coupent au centre de masse du deuxième étage E2.

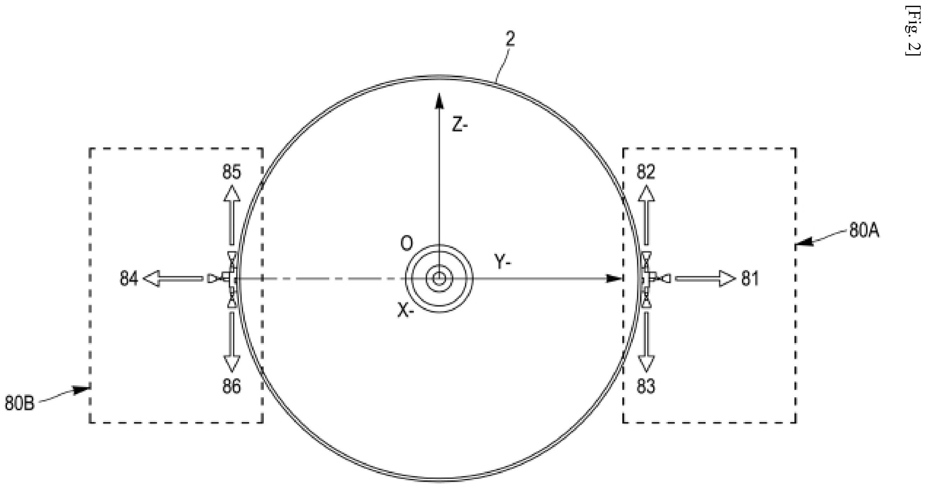

En référence à la figure 2, les deux sous-ensembles 80A,80B de propulseurs de commande de réaction RCS sont placés sur la périphérie de la jupe inférieure 2, de façon diamétralement opposée de part et d'autre du moteur principal 10. Dans chaque sous-ensemble 80A,80B,
- un propulseur de commande de réaction RCS 81 ou 84 est dédié à exercer une poussée selon l'axe ±Y afin de produire un couple de lacet autour de l'axe Z,
- une paire de propulseurs de commande de réaction RCS 82 et 85, ou 83 et 86, est dédiée à exercer une poussée sur l'axe ±Z afin de produire un couple de tangage autour de l'axe ±Y,
- et une paire de propulseurs de commande de réaction RCS 82 et 86, ou 83 et 85, est dédiée à exercer une poussée selon l'axe ±Z afin de produire un couple de roulis autour de l'axe X.

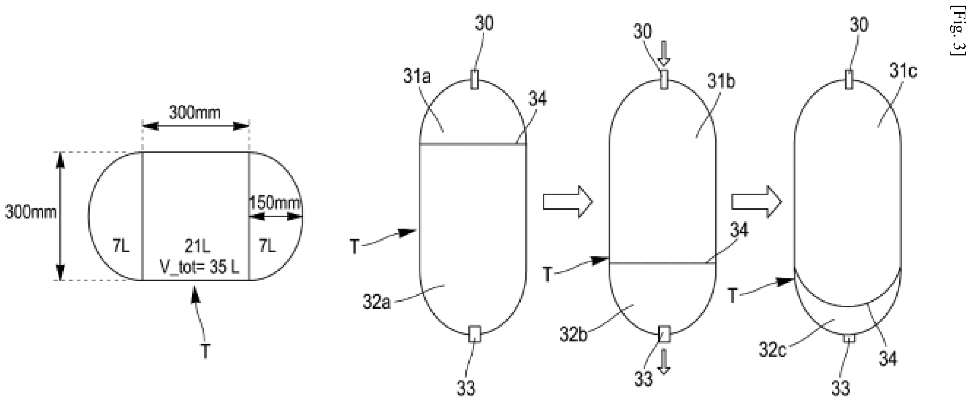

Dans un mode pratique de réalisation illustré par la figure 3, les deux réservoirs de propergol T mis en œuvre dans un système de propulsion auxiliaire selon l'invention peuvent avoir une forme cylindrique conventionnelle fermée par des hémisphères et présenter un volume de 35L, avec une longueur de 600 mm et un diamètre de 300 mm pour sa partie cylindrique.

Les deux réservoirs de propergol 14, 17 doivent être pressurisés par un gaz neutre, par exemple de l'hélium, qui est stocké dans un récipient à haute pression séparé. Le réservoir de gaz sous pression unique peut être sphérique ou de forme cylindrique tant que son diamètre extérieur ne dépasse pas par exemple 300 mm.

Lors de la charge initiale du réservoir T, le propergol liquide occupant un volume partie 32a est maintenu sous pression par du gaz hélium injecté par une entrée 30 du réservoir T et séparé du propergol par une vessie 34 occupant le volume restant 31a correspondant à environ 20% du volume total du réservoir T.

Après un certain temps d'utilisation avec une évacuation du propergol par une sortie 33 du réservoir T et une injection de gaz hélium de pressurisation, ce dernier occupe alors un volume 31b croissant qui devient supérieur à celui occupé par le propergol, jusqu'à ce que le propergol liquide n'occupe plus qu'un volume résiduel 32c.

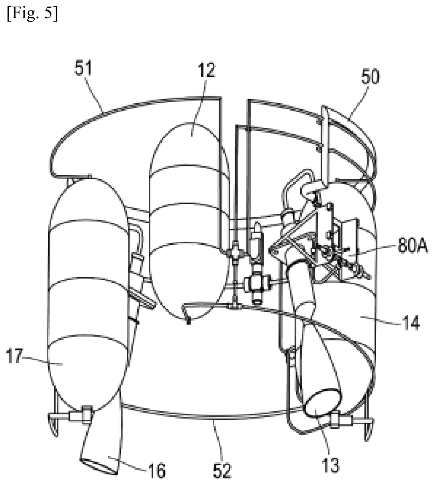

Un système de propulsion auxiliaire S selon l'invention est conçu de façon à mutualiser les réservoirs et canalisations afin d'en minimiser la masse et l'encombrement, comme l'illustre la figure 5. Ainsi, chaque réservoir de propergol 14,17 est configuré pour alimenter à la fois l'unité de propulsion auxiliaire 13,16 et les propulseurs de commande de réaction RCS 80A, 80B (non visible sur la figure 5). Le réservoir d'hélium 12 assure la pressurisation des deux réservoirs de propergol 14,17. Une canalisation commune 50 relie les réservoirs de propergol 14,17 aux unités de propulsion auxiliaire 13, 16 tandis que des canalisations de moindre débit 52 relient ces réservoirs 14,17 aux propulseurs de commande de réaction RCS 80A,80B.

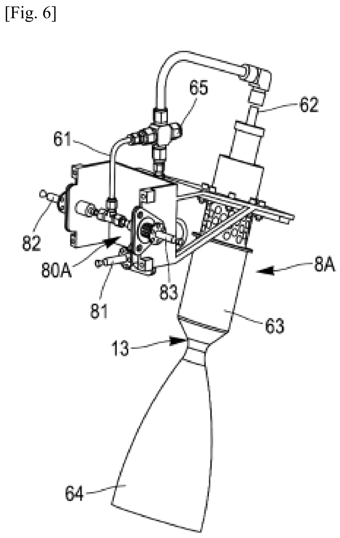

Le sous-ensemble 8A de propulsion auxiliaire comprend, en référence à la figure 6:
- une unité de propulsion auxiliaire 13 comprenant une chambre de combustion 63 pourvue d'une tuyère 64 et recevant le propergol via une canalisation 62,
- Un sous-ensemble 80A de trois propulseurs 81,82,83 de commande de réaction qui sont alimentées en propergol via une canalisation 61.

Les deux canalisations 61,62 sont toutes deux reliées à une canalisation commune 65 reliée à un réservoir commun de propergol (non représenté).

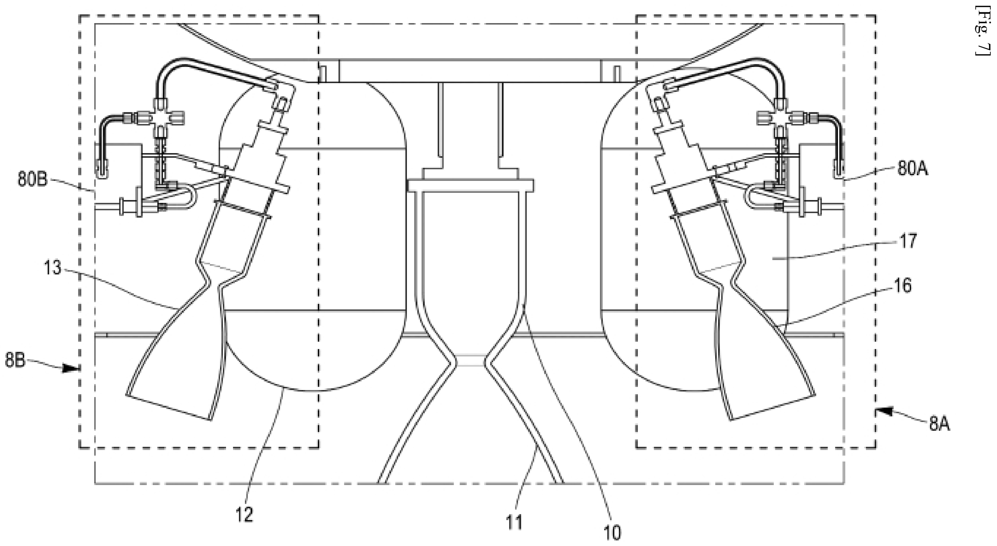

En référence à la figure 7, le moteur principal 10 équipé d'une tuyère 11, est entouré de deux réservoirs d'ergol 17 et à un réservoir d'hélium 12 prévu pour assurer la pressurisation du réservoir d'ergol 17, et de deux sous-ensembles 8A,8B de propulseurs auxiliaires comprenant chacun une unité de propulsion auxiliaire APU 16,13 et un ensemble 80A,80B de propulseurs de commande de réaction RCS.

Le pack de propulsion constitué d'un propulseur APU et de trois propulseurs RCS de chaque côté du lanceur doit être intégré comme un ensemble autonome avant d'être intégré au lanceur pour simplifier les processus d'intégration. Les supports mécaniques et les interfaces doivent donc permettre cette intégration. Un exemple de conception du support est présenté sur la Figure 6.

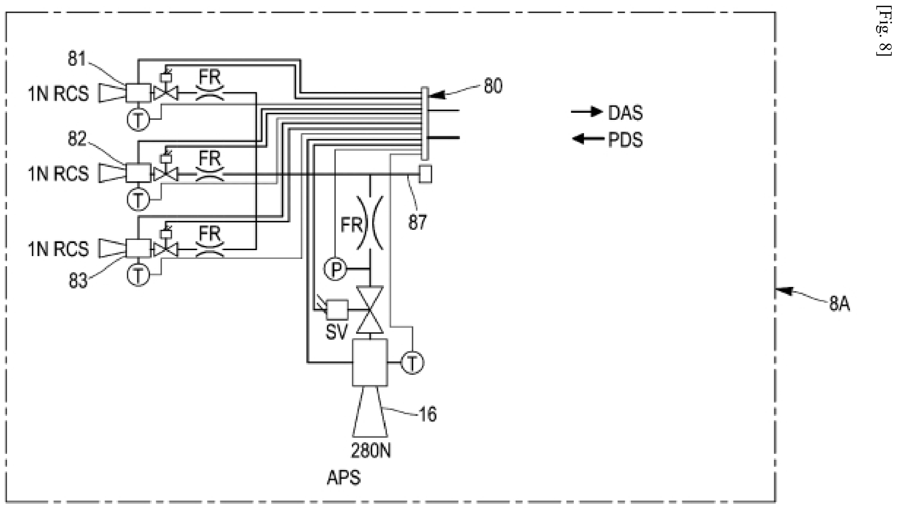

En référence à la figure 8, le pack de propulseurs 8A comportant l'unité de propulsion auxiliaire APU 16, d'une poussée de 280N, et les trois propulseurs de commande de réaction RCS 81,82,83 d'une poussée de 1N chacun, comprend en outre un panneau de connexion électrique 80. Ce panneau de connexion électrique 80 comprend d'une part des connexions avec l'extérieur du pack 8A et d'autre part des connexions avec les propulseurs du pack 8A.

Les connexions extérieures comprennent d'une part un câble transmettant des signaux issus de capteurs internes au pack 8A vers le système d'acquisition de données DAS, et d'autre part un câble transmettant des signaux de commande d'actionneurs issus du système de fourniture d'énergie PDS.

Les connexions intérieures du panneau de connexion électrique 80 comprennent des câbles de commande de l'unité de propulsion auxiliaire APU 16 et des trois propulseurs de commande de réaction RCS 81,82,83 pour leurs vannes respectives d'alimentation en ergol et pour leurs systèmes de préchauffage électrique respectifs , et des câbles de transmission de signaux de capteurs, notamment de température et de pression, disposés sur l'unité de propulsion auxiliaire APU et sur les trois propulseurs de commande de réaction.

L'unité de propulsion auxiliaire 16 et les trois propulseurs de commande de réaction 81,82, 83 sont alimentés en propergol via un port d'entrée de propergol 87.

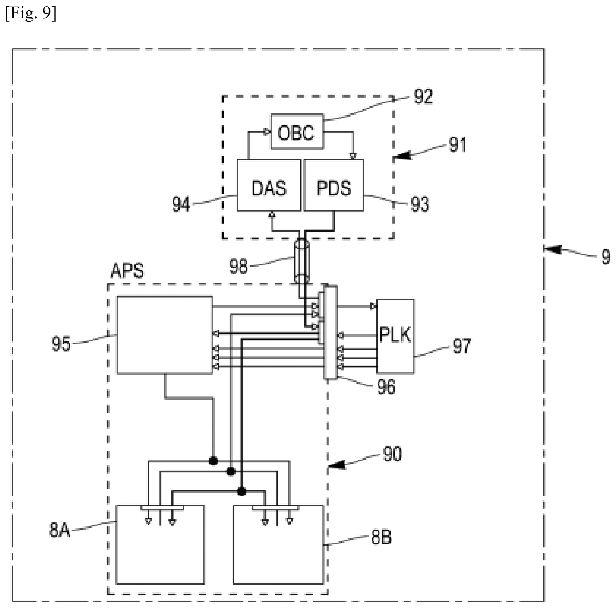

Dans un mode de réalisation illustré par la figure 9, un système de propulsion auxiliaire 9 selon l'invention comprend deux packs de propulseurs auxiliaires 8.1,8.2 comprenant chacun une unité de propulsion auxiliaire et ses trois propulseurs de commande de réaction associés.

Pour simplifier le processus d'intégration du système de propulsion auxiliaire APS dans le lanceur, ses connexions électriques peuvent être regroupées en trois groupes : le groupe de distribution de propergol et deux packs de propulseurs. Chaque groupe dispose d'un seul connecteur pour les lignes électriques vers les actionneurs du groupe et d'un seul connecteur pour les lignes provenant des capteurs du groupe.

Le panneau de connexion 96 entre le système de propulsion auxiliaire APS 90 et le kart de chargement en propergol PLK 97 est situé sur la jupe du deuxième étage du lanceur spatial. Elle est totalement indépendante des autres plaques de connexion fluidiques ou électriques du lanceur.

Un système de contrôle/commande 91 comportant un ordinateur de bord (OBC) 92, un système de fourniture d'énergie (PDS) 93 et un système d'acquisition de données (DAS) 94 est relié via un faisceau 98 au panneau de connexion 96.

Ce panneau de connexion 96 peut être manipulé manuellement par un opérateur (connexions et déconnexions) et doit donc être conçu pour une utilisation sûre contre les fuites de pression et de propergol.

La conception du panneau de connexion 96 doit être orientée vers la minimisation de la masse et des saillies sur la partie du panneau qui reste sur le lanceur après déconnexion.

Le panneau de connexion APS/PLK doit inclure les fonctions suivantes :
- connexion physique/mécanique
- connexion(s) gaz haute et basse pression
- connexion(s) ergol(s)
- Prévention des fuites de tous les éléments ci-dessus (pression, gaz, ergol...)
- Connexions électriques pour l'accès du kart de chargement en propergol PLK aux actionneurs et capteurs APS embarqués.

Ces deux packs de propulseurs sont alimentés en propergol et en gaz à partir d'un système de fourniture de propergol 95, lui-même rempli via le panneau de connexion 96 par le kart de chargement en propergol PLK 97. Les deux packs 8.1,8.2 sont aussi alimentés en énergie électrique à partir d'un système de fourniture d'énergie PDS 93 qui alimente également le système de fourniture de propergol 95. Le kart de chargement en propergol PLK 97 est, lui, indépendant avec sa propre alimentation électrique de manière à être capable d'interagir avec le système APS à bord du lanceur même lorsque ce dernier et son système d'alimentation PDS sont éteints.

Tous les ports de remplissage, de vidange et de mise à l'évent (pour le gaz et l'ergol) du système de propulsion auxiliaire APS sont situés sur la peau extérieure du lanceur, sur une seule plaque de connexion fluidique qui sert d'interface entre le système de propulsion auxiliaire APS et le kart de chargement en ergol PLK.

Le routage des canalisations de l'APS doit être conçu pour limiter les différences de pertes de charge dans les lignes de gaz et d'ergols (diamètre, équipement, longueur...) pour assurer une symétrie de poussée maximale entre les propulseurs opposés.

La tuyauterie et l'instrumentation fluidique de l'APS doivent permettre de tirer simultanément plusieurs APU et propulseurs RCS tout en maintenant les performances nominales de chaque propulseur. L'APS partage des interfaces mécaniques avec le châssis principal du lanceur sur plusieurs points de montage.

Les sorties de tuyère des propulseurs RCS et APU sont situées à l'extérieur du cadre du deuxième étage du lanceur et doivent être intégrées de manière à réduire les protubérances et les effets aérodynamiques sur le lanceur (et les propulseurs) pendant le vol atmosphérique.

Pendant les opérations au sol, le kart de chargement de propergol PLK est connecté au système de propulsion auxiliaire APS via un panneau de connexion unique qui assure l'alimentation en fluides (gaz et propulseur) et en électricité.

Le carburant propulseur utilisé dans un système de propulsion auxiliaire APS selon l'invention peut être un carburant bi-ergol pré-mélangé personnalisé. Il s'agit d'une combinaison d'un comburant (HTP peroxyde d'hydrogène) et d'un carburant à base d'alcool, dans un seul liquide stable à température ambiante. La combustion est déclenchée dans la chambre de combustion des propulseurs grâce à un lit catalytique préchauffé.

Bien sûr, l'invention n'est pas limitée à l'exemple de réalisation qui vient d'être décrit, et bien d'autres modes de réalisation peuvent être envisagés, sans sortir du cadre de l'invention.

Ainsi, on peut prévoir au sein du système propulseur auxiliaire APS selon l'invention des plateaux d'équipement (pour *« equipment shelves »)* servant à accueillir les différents composants fluides et électriques de l'APS afin d'en faciliter le processus d'intégration. Les composants fluides et électriques sont intégrés et testés au préalable sur les plateaux, puis après validation, cet ensemble de composant fluides et électriques est intégré sur le lanceur, suivant la même logique que les packs de propulseurs.

## Revendications

1. Lanceur spatial (1) comprenant un premier étage (E1) équipé d'un premier système de propulsion dédié à la phase de vol intra-atmosphérique dudit lanceur (1) et un deuxième étage (E2) prévu pour recevoir une charge utile, comportant un moteur principal (10) et un système de propulsion auxiliaire (APS) (S) intégrant deux unités de propulsion auxiliaires (APU) (13,16) pour réaliser des manœuvres orbitales et un ensemble de propulseurs de commande de réaction (RCS) (80A,80B) chargés du contrôle d'attitude dudit deuxième étage (E2) lors de la phase de vol extra-atmosphérique dudit lanceur (1).

2. Lanceur spatial (1) selon la revendication précédente, **caractérisé en ce que** le système de propulsion auxiliaire (APS) (S) et l'ensemble de propulseurs de commande de réaction (RCS) (80A,80B) partagent des réservoirs (14,17) et des lignes d'alimentation communes (50,52).

3. Lanceur spatial (1) selon l'une des revendications précédentes, **caractérisé en ce que** le système de propulsion auxiliaire (APS) (S) est fixé sur une jupe inférieure (2) du deuxième étage (E2) autour du moteur principal (10).

4. Lanceur spatial (1) selon la revendication précédente, **caractérisé en ce que** les deux unités de propulsion auxiliaire (13,16) sont situées symétriquement par rapport à un axe longitudinal du lanceur (1), de chaque côté du moteur principal (10).

5. Lanceur spatial (1) selon la revendication précédente, **caractérisé en ce que** l'ensemble de propulseurs de commande de réaction (RCS) comprend deux sous-ensembles (80A,80B) de trois propulseurs (81-83 ;84-86) de chaque côté dudit lanceur (1), chaque sous-ensemble de propulseurs (80A,80B) étant situé à proximité de chaque unité de propulsion auxiliaire (APU) (13,16).

6. Lanceur spatial (1) selon la revendication précédente, **caractérisé en ce que** les unités de propulsion (APU) (13,16) sont orientées chacune d'un angle prédéterminé par rapport à l'axe longitudinal dudit lanceur, les axes longitudinaux respectifs desdits unités de propulsion auxiliaire se coupant au centre de masse du deuxième étage.

7. Lanceur spatial (1) selon l'une des deux revendications précédentes, **caractérisé en ce que** le système de propulsion auxiliaire (S) comprend, pour chaque unité de propulsion auxiliaire APU (13,16), un réservoir de propergol agencé pour alimenter aussi les propulseurs de commande de réaction (RCS) (80A,80B).

8. Lanceur spatial (1) selon la revendication précédente, **caractérisé en ce que** les réservoirs de propergols (14,17) prévus pour alimenter les unités de propulsion auxiliaires (13,16) sont disposés face à face dans une section entre les premier et deuxième étages (E1,E2) pour équilibrer la position du centre de masse du système de propulsion auxiliaire (S) sur les axes de tangage et de lacet dudit lanceur (1).

9. Lanceur spatial (1) selon l'une quelconque des revendications 5 à 8, **caractérisé en ce que** les deux sous-ensembles (8A,8B) de propulseurs auxiliaires comprennent chacun une unité de propulsion auxiliaire APU.

10. Lanceur spatial (1) selon la revendication précédente, **caractérisé en ce qu'** un sous-ensemble de propulsion de commande de réaction (RCS) (80A,80B) et son unité de propulsion auxiliaire (APU) associée sont conçus comme un ensemble autonome avant d'être intégré dans ledit lanceur (1).

11. Lanceur spatial (1) selon la revendication précédente, **caractérisé en ce que** des sorties de tuyère des propulseurs de commande de réaction (RCS) et de l'unité de propulsion auxiliaire (APU) sont situées à l'extérieur du cadre du deuxième étage (E2).

12. Lanceur spatial (1) selon la revendication précédente, dans lequel le système de propulsion auxiliaire (S) comporte des actionneurs de système de propulsion auxiliaire et des capteurs de système de propulsion auxiliaire, **caractérisé en ce qu'**il comprend en outre, pendant son vol, un système d'alimentation en énergie (PDS) dudit lanceur pour alimenter lesdits actionneurs et un système d'acquisition de données (DAS) dudit lanceur auquel les dits capteurs sont connectés.

13. Système de propulsion auxiliaire (APS) (S) équipant un lanceur spatial (1) selon l'une quelconque des revendications précédentes, ce lanceur spatial comprenant un premier étage (E1) équipé d'un premier système de propulsion dédié à la phase de vol intra-atmosphérique dudit lanceur et un deuxième étage (E2) prévu pour recevoir une charge utile et comportant un moteur principal (10), **caractérisé en ce qu'**il comprend deux unités de propulsion auxiliaires (APU) (13,16) et un ensemble de propulseurs de commande de réaction (RCS) (81-83 ;84-86) chargés du contrôle d'attitude dudit deuxième étage (E2) lors de la phase de vol extra-atmosphérique dudit lanceur (1).

14. Système de propulsion auxiliaire (S) selon la revendication précédente, **caractérisé en ce qu'**il est organisé en deux sous-ensembles de propulsion auxiliaire (8A,8B) comprenant chacun une unité de propulsion auxiliaire (APU) (13,16) et un sous-ensemble de propulseurs de commande de réaction (RCS) (80A,80B), ces deux sous-ensembles de propulsion auxiliaire (8A,8B) étant disposés de part et d'autre du moteur principal (10).
